# DEMANDE DE BREVET EUROPEEN

(11) **EP 2 876 551 A1**
(43) Date de publication de la demande: **27.05.2015**
(21) Numéro de dépôt: 14193557.7
(22) Date de dépôt: 17.11.2014
(51) Int. Cl.: G06F 9/44

(54) **Procédé, programme d'ordinateur et dispositif de configuration ou de maintenance d'un système informatique dans un cluster**

(30) Priorité: 22.11.2013 FR 1361549
(71) Demandeur: BULL SAS, 78340 Les Clayes sous Bois (FR)
(72) Inventeur: Temporelli, Frédéric, 38130 Echirolles (FR); Cotte-Barrot, Christian, 38140 Vaulnaveys-le-Haut (FR)
(74) Mandataire: Santarelli

(57) **Abrégé**

L'invention a notamment pour objet la configuration et la maintenance d'un système informatique dans un cluster, le système informatique étant configuré pour permettre un démarrage à partir de données stockées dans un système informatique d'administration. Après avoir obtenu (420, 422) de ce dernier une image de disquette de démarrage permettant le démarrage d'un système d'exploitation et des données de configuration, le système d'exploitation est démarré et configuré (424) et un disque virtuel de stockage est créé. Les données de configuration reçues sont analysées afin d'obtenir (432) et stocker dans le disque virtuel un programme de configuration du système informatique. Ce dernier est ensuite exécuté (438).

## Description

La présente invention concerne la configuration et la maintenance de systèmes informatiques et plus particulièrement un procédé, un programme d'ordinateur et un dispositif de configuration ou de maintenance d'un système informatique dans un cluster, utilisant de manière flexible un système d'exploitation n'utilisant que la mémoire vive du système informatique sur lequel il fonctionne.

Le calcul haute performance, aussi appelé HPC (sigle de *High Performance Computing* en terminologie anglo-saxonne) se développe pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters (parfois traduit « *grappes de serveurs »* ou « *ferme de serveurs* »). Un cluster comprend typiquement un ensemble de systèmes informatiques mis en oeuvre dans des noeuds interconnectés. Certains noeuds sont typiquement utilisés pour effectuer des tâches de calcul (noeuds de calcul), d'autres pour stocker des données (noeuds de stockage) et un ou plusieurs autres gèrent le cluster (noeuds d'administration). Chaque noeud est par exemple un serveur mettant en oeuvre un système d'exploitation tel que Linux (Linux est une marque). La connexion entre les noeuds est, par exemple, réalisée à l'aide de liens de communication Ethernet et de réseaux d'interconnexions (par exemple Infiniband) (Ethernet et Infiniband sont des marques).

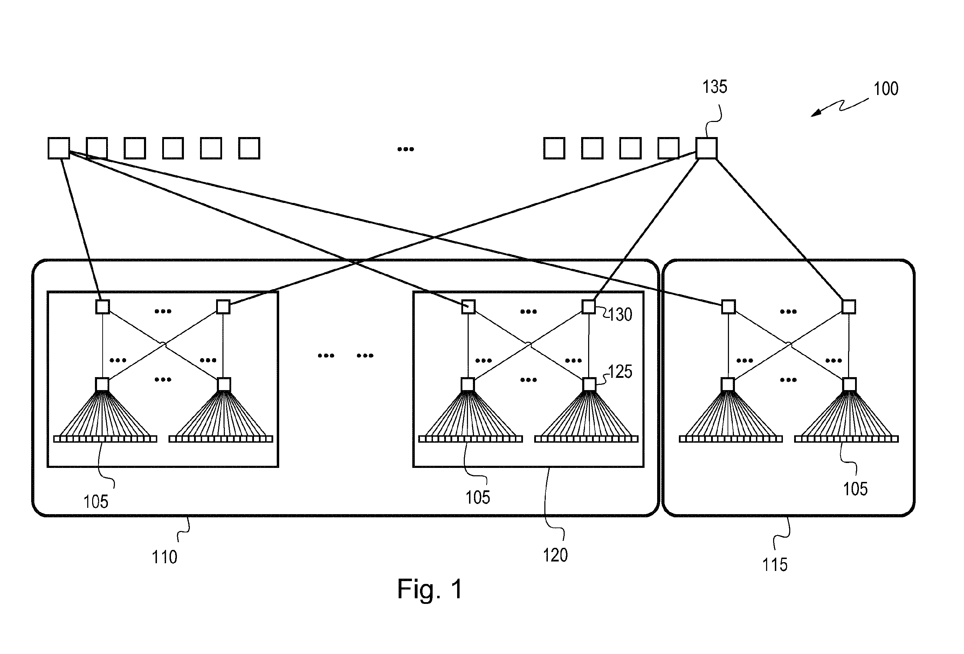

La figure 1 illustre schématiquement un exemple d'une topologie 100 d'un cluster, de type *fat-tree.* Ce dernier comprend un ensemble de noeuds génériquement référencés 105. Les noeuds appartenant à l'ensemble 110 sont ici des noeuds de calcul tandis que les noeuds de l'ensemble 115 sont des noeuds de service (noeuds de stockage et noeuds d'administration). Les noeuds de calcul peuvent être regroupés en sous-ensembles 120 appelés îlots de calcul, l'ensemble 115 étant appelé îlot de service.

Les noeuds sont reliés les uns aux autres par des commutateurs (appelés *switch* en terminologie anglo-saxonne), par exemple de façon hiérarchique. Dans l'exemple illustré sur la figure 1, les noeuds sont connectés à des commutateurs 125 de premier niveau qui sont eux-mêmes reliés à des commutateurs 130 de deuxième niveau qui sont à leur tour reliés à des commutateurs 135 de troisième niveau.

La procédure de démarrage d'un système informatique, connue sous le nom de *boot* en terminologie anglo-saxonne, a pour objet l'obtention d'un système d'exploitation, accessible via un périphérique de stockage permanent ou amovible, qui permet ensuite le chargement et l'exécution de programmes applicatifs. Ce système d'exploitation est obtenu par l'intermédiaire d'un programme plus simple, appelé *bootloader* en terminologie anglo-saxonne, exécuté par l'intermédiaire du BIOS (acronyme de *Basic Input Output System* en terminologie anglo-saxonne) généralement contenu dans une mémoire morte de la carte mère du système informatique.

Durant cette phase de démarrage, toutes les composantes logicielles essentielles et nécessaires au fonctionnement du système informatique sont chargées en mémoire vive.

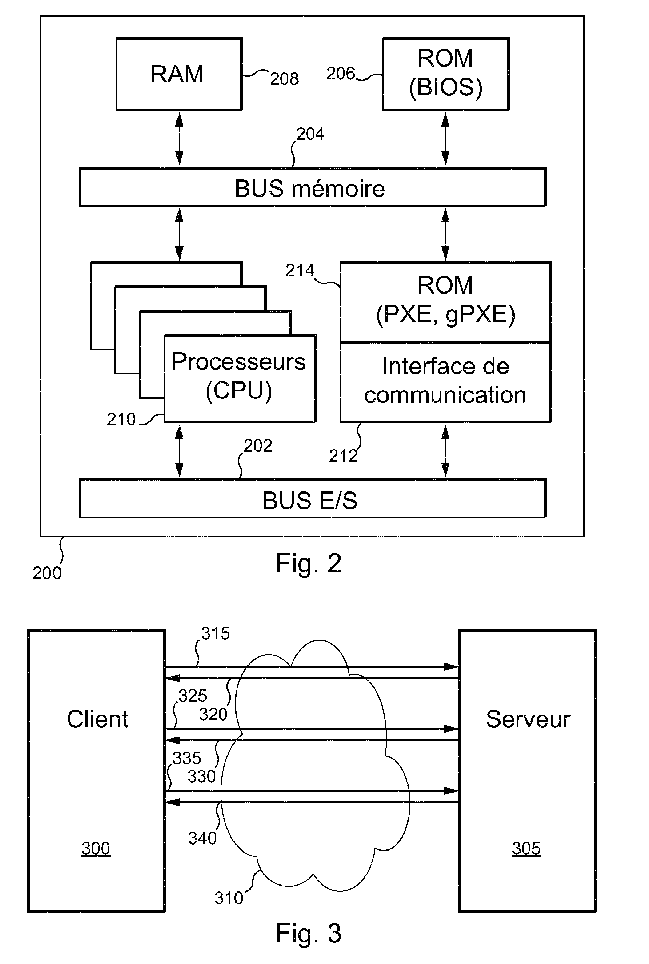

Un exemple d'architecture d'un système informatique appartenant à un cluster est illustré sur la figure 2.

Le dispositif 200 comporte ici un bus de communication 202 permettant l'échange de données avec des éléments externes au dispositif 200 (bus d'entrée/sortie) et un bus de communication 204 dédié aux échanges de données avec une mémoire.

Une mémoire morte 206 (ROM, acronyme de *Read Only Memory* en terminologie anglo-saxonne ou EEPROM, acronyme d'*Electrically-Erasable Programmable Read-Only Memory* en terminologie anglo-saxonne) contenant le programme BIOS du système ainsi qu'une mémoire vive 208 (RAM, acronyme de *Random Access Memory* en terminologie anglo-saxonne) comportant des registres adaptés à enregistrer des variables et paramètres créés et modifiés au cours de l'exécution de programmes ainsi qu'un système d'exploitation (comprenant typiquement au moins un noyau et un système de fichiers) sont connectées au bus 204.

Une ou plusieurs unités centrales de traitement ou microprocesseurs 210 (ou CPU, sigle de *Central Processing Unit* en terminologie anglo-saxonne) ainsi qu'une interface de communication 212 adaptée à transmettre et à recevoir des données à travers un réseau sont connectées aux bus 202 et 204. L'interface de communication 212 comprend ici une mémoire morte d'extension 214, appelée *expansion ROM en* terminologie anglo-saxonne, qui contient un programme permettant l'amorçage du système d'exploitation à travers un réseau de communication.

Il est observé ici qu'il existe une procédure de démarrage connue sous le nom de PXE (sigle de *Pre-boot eXecution Environment* en terminologie anglo-saxonne) ou gPXE (version libre de PXE) pouvant être utilisée pour charger des composants logiciels dans la mémoire vive 208 depuis un dispositif de stockage distant, via un réseau de communication.

Les bus de communication 202 et 204 permettent la communication et l'interopérabilité entre les différents éléments inclus dans le dispositif 200 ou reliés à lui. La représentation des bus n'est pas limitative et, notamment, les unités centrales sont susceptibles de communiquer des instructions à tout élément du dispositif 200 directement ou par l'intermédiaire d'un autre élément du dispositif 200.

Pour être exécuté, le code exécutable stocké, par exemple, dans la mémoire morte 206 ou dans la mémoire morte d'extension 214 est typiquement chargé dans la mémoire vive 208.

Ainsi, les unités centrales 210 commandent et dirigent l'exécution des instructions ou portions de code logiciel du ou des programmes qui sont stockés dans la mémoire vive 208 à partir de la mémoire morte d'extension 214, de la mémoire morte 206 ou de tout autre élément de stockage, local ou distant.

Des tâches importantes de configuration et de maintenance des systèmes informatiques, par exemple la mise à jour de BIOS et la modification des champs DMI (sigle de *Desktop Media Interface* en terminologie anglo-saxonne), comprenant des informations telles que des numéros de série de machines, lorsqu'une mémoire morte de type EEPROM est utilisée, nécessitent un environnement d'exploitation de type DOS (acronyme de *Disk Operating System* en terminologie anglo-saxonne).

En effet, alors qu'il existe d'autres environnements pour ces opérations de configuration et de maintenance, ces environnements présentent des inconvénients, notamment en termes de coûts. Alors que les coûts des outils de type DOS sont typiquement inclus dans la licence des BIOS, payée pour chaque machine, il est généralement nécessaire d'acquérir des licences spécifiques pour les outils de configuration et de maintenance utilisés dans d'autres environnement, par exemple dans l'environnement Linux (Linux est une marque). De telles licences peuvent dépasser dix dollars par an et par machine. Par conséquent, les coûts pour un cluster peuvent s'élever à plusieurs dizaines de milliers de dollars par an.

Cependant, la taille des données et des programmes utilisés pour l'exécution de tâches de configuration et de maintenance de systèmes informatiques ne permet plus l'utilisation de média de stockage de type disquette dont la capacité de stockage (typiquement de l'ordre de 1,4 Mo) est trop faible. Par conséquent, l'exécution de tâches de configuration et de maintenance de systèmes informatiques dans un environnement de type DOS nécessite typiquement un support de type clé USB (sigle de *Universal Serial Bus* en terminologie anglo-saxonne), un disque dur, un CD-ROM (sigle de *Compact Disc - Read Only Memory* en terminologie anglo-saxonne) ou DVD-ROM (sigle de *Digital Versatile Disc - Read Only Memory* en terminologie anglo-saxonne). Bien que présentant des avantages, un tel support est difficile à maintenir, par exemple pour ajouter une mise à jour d'un nouveau BIOS, et, nécessite des interventions manuelles, machine par machine, qui sont difficilement compatibles avec une utilisation dans des fermes ou des clusters de serveurs.

L'invention permet de résoudre au moins un des problèmes exposés précédemment.

L'invention a ainsi pour objet un procédé de configuration d'un système informatique client dans un cluster comprenant une pluralité de systèmes informatiques dont au moins un est un système informatique d'administration, les systèmes informatiques de ladite pluralité de systèmes informatiques étant connectés via un réseau, ledit système informatique client étant configuré pour permettre un démarrage à partir de données stockées dans ledit système informatique d'administration, le procédé comprenant les étapes suivantes,
- obtention d'une image d'un média de démarrage, typiquement d'une disquette de démarrage, permettant le démarrage d'un système d'exploitation de type DOS et obtention de données de configuration dudit système d'exploitation, ladite image de média de démarrage et lesdites données de configuration étant reçues dudit système informatique d'administration via ledit réseau ;
- démarrage et configuration dudit système d'exploitation, ladite étape de démarrage et de configuration comprenant une étape de création d'un disque virtuel de stockage, la taille de l'espace de stockage du disque virtuel étant de préférence supérieure à la taille du média de démarrage, par exemple 10 à 1 000 fois supérieure ;
- analyse desdites données de configuration reçues et, en réponse, obtention d'au moins un programme de configuration dudit système informatique client, ledit au moins un programme de configuration dudit système informatique client étant reçu dudit système informatique d'administration via ledit réseau et stocké dans ledit disque virtuel de stockage ; et
- exécution dudit au moins un programme de configuration dudit système informatique client.

Le procédé selon l'invention permet ainsi de faciliter les opérations de configuration et de maintenance de systèmes informatiques dans un cluster, en particulier lorsque la taille de l'image du média de démarrage utilisé ne permet pas d'y stocker les outils de configuration et de maintenance.

Selon un mode de réalisation particulier, le procédé comprend en outre une étape d'obtention d'un script d'automatisation permettant l'obtention et l'exécution dudit au moins un programme de configuration dudit système informatique client, ledit script d'automatisation étant obtenu dudit système informatique d'administration.

Toujours selon un mode de réalisation particulier, le procédé comprend en outre une étape d'exécution d'au moins une première commande dudit script d'automatisation pour obtenir ledit au moins un programme de configuration dudit système informatique client et une étape d'exécution d'au moins une seconde commande dudit script d'automatisation pour exécuter ledit au moins un programme de configuration dudit système informatique client.

Toujours selon un mode de réalisation particulier, le procédé comprend en outre une étape préliminaire de configuration d'au moins l'un desdits système informatique client et système informatique d'administration.

Toujours selon un mode de réalisation particulier, le procédé comprend en outre une étape initiale de chargement d'un programme d'amorçage, ledit programme d'amorçage comprenant des instructions pour l'exécution desdites étapes d'obtention d'une image de média de démarrage permettant le démarrage d'un système d'exploitation de type DOS et d'obtention de données de configuration dudit système d'exploitation.

Toujours selon un mode de réalisation particulier, le procédé comprend en outre une étape de transmission d'un résultat d'exécution dudit au moins un programme de configuration dudit système informatique client.

Toujours selon un mode de réalisation particulier, le procédé comprend en outre une étape d'obtention d'un script d'amorce, ladite étape de configuration dudit système d'exploitation étant effectuée en réponse à l'exécution d'une commande dudit script d'amorce.

Toujours selon un mode de réalisation particulier, ladite image de média de démarrage permettant le démarrage d'un système d'exploitation de type DOS et lesdites données de configuration dudit système d'exploitation sont obtenues via ledit réseau selon un protocole de type TFTP (sigle de *Trivial File Transfer Protocol* en terminologie anglo-saxonne) et selon lequel ledit au moins un programme de configuration dudit système informatique client est obtenu via ledit réseau selon un protocole de type HTTP (sigle d'*HyperText Transfer Protocol* en terminologie anglo-saxonne).

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un dispositif comprenant des moyens adaptés à la mise en oeuvre de chacune des étapes du procédé décrit précédemment.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- La figure 1 illustre un exemple de topologie d'un cluster ;
- la figure 2 illustre un exemple d'architecture d'un système informatique d'un cluster ;
- la figure 3 illustre schématiquement une séquence d'initialisation de démarrage, conformément au protocole PXE, entre un système informatique d'administration et un système informatique client, pour obtenir et lancer un système d'exploitation à partir d'images accessibles via un réseau de communication ;
- la figure 4 illustre certaines étapes d'un algorithme de démarrage et de configuration d'un système informatique d'un cluster conformément à un mode de réalisation ; et
- la figure 5, comprenant les figures 5a à 5e, représente schématiquement l'état d'un système informatique d'administration et d'un système informatique client lors de l'exécution de l'algorithme 400 illustré sur la figure 4.

Selon un mode de réalisation particulier, un environnement DOS est déployé, via réseau, dans un ou plusieurs systèmes informatiques d'un cluster comprenant un ensemble de systèmes informatiques, aussi appelés noeuds, pour exécuter des tâches de configuration et de maintenance.

A ces fins, le cluster comprend un système informatique d'administration, couramment appelé serveur d'administration, configuré pour fournir des informations à des systèmes informatiques dans lesquels des tâches de configuration ou maintenance doivent être exécutées. Typiquement, le système informatique d'administration comprend un service de démarrage tel qu'un service de boot PXE pour fournir des adresses, des fichiers et des paramètres de démarrage (par exemple via un serveur DHCP (sigle de *Dynamic Host Configuration Protocol* en terminologie anglo-saxonne)), un serveur de type TFTP (sigle de *Trivial File Transfer Protocol* en terminologie anglo-saxonne) pour fournir des fichiers de démarrage et de configuration et un serveur de type HTTP (sigle d'*HyperText Transfer Protocol* en terminologie anglo-saxonne) pour archiver des scripts et des programmes de configuration et maintenance.

Le système informatique d'administration comprend en outre des services réseaux standard et offre des fonctions de démarrage sur réseau à des systèmes informatiques du cluster. Le système informatique d'administration peut être réparti sur plusieurs systèmes informatiques d'administration

Il est rappelé ici qu'un serveur DHCP distribue des adresses réseaux à des systèmes informatiques clients (il fournit l'adresse du client, l'adresse de la passerelle et du serveur de noms). Il peut également donner d'autres informations aux clients, notamment des adresses de serveur TFTP et des noms de fichiers que des systèmes informatiques client doivent télécharger. Un serveur TFTP peut fournir les fichiers nécessaires pour démarrer un système d'exploitation ainsi qu'un programme chargé, en général par la carte réseau, d'initialiser l'environnement avant le démarrage du système d'exploitation.

Toujours selon un mode de réalisation particulier, un système informatique du cluster charge en mémoire, lors de son démarrage, à partir du système informatique d'administration et via le réseau en utilisant un protocole de type PXE, une image de disquette DOS configurée selon l'invention. Après que cette image ait été chargée, le système informatique lance l'exécution du système d'exploitation DOS stocké dans cette image.

Les fonctionnalités réseau du système d'exploitation DOS, c'est-à-dire, typiquement, le pilote (appelé *driver* en terminologie anglo-saxonne) de carte réseau et l'adresse IP (sigle d'*Internet Protocol* en terminologie anglo-saxonne) via un serveur DHCP, sont configurées.

De façon avantageuse, le système d'exploitation DOS est configuré pour exploiter la « mémoire haute » du système informatique, permettant ainsi de disposer d'une mémoire dont la taille peut atteindre jusqu'à 4Go et ainsi générer en mémoire vive un disque virtuel de grande taille, par exemple un disque virtuel de 512Mo.

Après avoir été lancé et initialisé, le système d'exploitation obtient un programme d'amorce (ou script), le mémorise dans l'espace de stockage du disque virtuel et lance son exécution. Ce programme d'amorce analyse des paramètres configurés au boot et transmis par le serveur d'administration. En particulier, le programme d'amorce extrait des paramètres de boot les informations permettant de charger, depuis le système informatique d'administration ou un autre serveur, un fichier contenant le programme à exécuter dans l'environnement DOS. Il peut s'agir, par exemple, d'un programme de mise à jour du BIOS. Ce programme est chargé via le réseau et stocké dans le disque virtuel préalablement créé.

Le programme d'amorce se termine en lançant le programme a exécuter dans l'environnement DOS.

Il est rappelé ici qu'il est généralement possible de paramétrer le BIOS pour, par exemple, définir l'ordre des périphériques à scruter afin de détecter une zone de démarrage. Il est ainsi possible de démarrer un système informatique via un réseau en obtenant une image du système d'exploitation disponible sur un système de stockage distant dans le réseau. Une telle procédure de démarrage est notamment connue sous le nom de PXE ou gPXE (version libre de PXE pouvant être utilisée dans un réseau de type InfiniBand ou Ethernet, InfiniBand et Ethernet sont des marques).

Dans cette procédure, les composantes et les directives spécifiques d'exécution du système d'exploitation sont obtenues par le chargement de différents fichiers.

Lorsque ces fichiers sont chargés, sous forme d'images, le système d'exploitation peut alors être démarré en exécutant le programme contenu dans l'image.

La figure 3 illustre schématiquement une séquence d'initialisation de démarrage, conformément au protocole PXE, entre un système informatique d'administration et un système informatique client, pour obtenir et lancer un système d'exploitation à partir d'images accessibles via un réseau de communication.

Comme illustré, un système informatique client 300 est ici connecté à un serveur 305 via un réseau de communication 310. Une première étape, référencée 315, consiste en une recherche d'une configuration IP sur un serveur DHCP. Outre les informations de configurations IP, la réponse 320 du serveur DHCP indique une localisation d'un fichier de directives PXE. La localisation de ce fichier de directives permet également de définir le protocole de transfert devant être utilisé.

Après avoir obtenu du serveur DHCP une configuration IP et une localisation de fichier de directives, le client émet une requête 325 au serveur pour réaliser le transfert du fichier de directives localisé. En réponse (référencée 330), le fichier de directives est reçu du serveur. Typiquement, le fichier de directives reçu défini la localisation d'un fichier correspondant à l'image du système d'exploitation et aux paramètres associés.

Le client transmet alors une requête 335 visant l'obtention du fichier correspondant à l'image du système d'exploitation et aux paramètres associés qui sont reçus du serveur (référence 340) en réponse à cette requête.

Il est observé ici que, dans le cadre de l'utilisation du protocole PXE, les requêtes et les transferts de fichiers utilisent généralement le protocole TFTP.

Après le chargement en mémoire des fichiers correspondant à l'image du système d'exploitation et aux paramètres associés, le *bootloader* se termine en enchaînant sur l'exécution du point d'entrée du système d'exploitation.

Ainsi, selon un mode de réalisation particulier, un système informatique d'administration peut être configuré pour permettre le démarrage par réseau de systèmes informatiques selon un mécanisme de boot PXE utilisant les protocoles DHCP, TFTP et un outil connu sous le nom de PXELINUX. Ce dernier est un programme qui fait partie du projet SYSLINUX. Il permet de lire un fichier de configuration et de lancer un système d'exploitation en bootant, notamment, à partir d'images de médias, typiquement de disquettes. Le système informatique d'administration est, en outre, avantageusement configuré pour distribuer des fichiers via le protocole HTTP.

Selon un mode de réalisation particulier, une image de disquette de type FreeDOS est réalisée pour permettre le démarrage d'un système d'exploitation DOS minimal (taille de 1.44 Mo) avec des programmes et une configuration permettant d'accéder à un réseau et disposer d'un disque virtuel tel qu'un disque virtuel de 512 Mo. Il est rappelé ici que FreeDOS est un système d'exploitation libre, compatible avec le système d'exploitation DOS, pouvant être utilisé dans de nombreux environnements, en particulier dans des systèmes embarqués.

Après initialisation du système d'exploitation, le programme d'amorce permettant d'exécuter un programme de configuration ou de maintenance est lancé. Ce programme d'amorce analyse deux variables obtenues lors du boot, l'une représentant une URL (sigle *d'Uniform Resource Locatoren* terminologie anglo-saxonne), selon, par exemple, le protocole HTTP, localisée sur la machine d'administration, comprenant l'adresse du programme de configuration ou de maintenance à exécuter et l'autre visant le nom sous lequel le programme de configuration ou de maintenance doit être enregistré dans le disque virtuel préalablement créé.

Le programme d'amorce charge alors le programme de configuration ou de maintenance selon l'URL déterminée et l'enregistre dans le disque virtuel selon le nom déterminé. Après avoir été enregistré, l'exécution du programme de configuration ou de maintenance est lancée par le programme d'amorce.

Il est observé que, selon un mode de réalisation particulier, le jeu de commande disponible dans l'environnement DOS est minimal mais permet au programme de configuration ou de maintenance de charger des commandes et des données supplémentaires depuis le système informatique d'administration.

Alternativement, il est possible d'utiliser des archives compressées stockées dans l'image du système d'exploitation, avec les commandes et les données, le système DOS minimal étant alors pourvu d'une commande de décompression d'archive.

Grâce à l'utilisation d'un disque virtuel, le système informatique client dispose, après le démarrage du système d'exploitation, d'une capacité de stockage bien plus importante que la capacité traditionnelle d'une disquette, par exemple de 10 à 1 000 fois supérieure à celle d'une disquette. Il est très facilement reconfigurable par modification des paramètres obtenus lors du boot (typiquement du boot PXE) et/ou du programme et des données de configuration ou de maintenance qui n'ont pas à être encapsulés dans un fichier image. Par ailleurs, il repose sur des technologies fiables et robustes (HTTP) et peut être mis en oeuvre dans des machines ne disposant pas de disque.

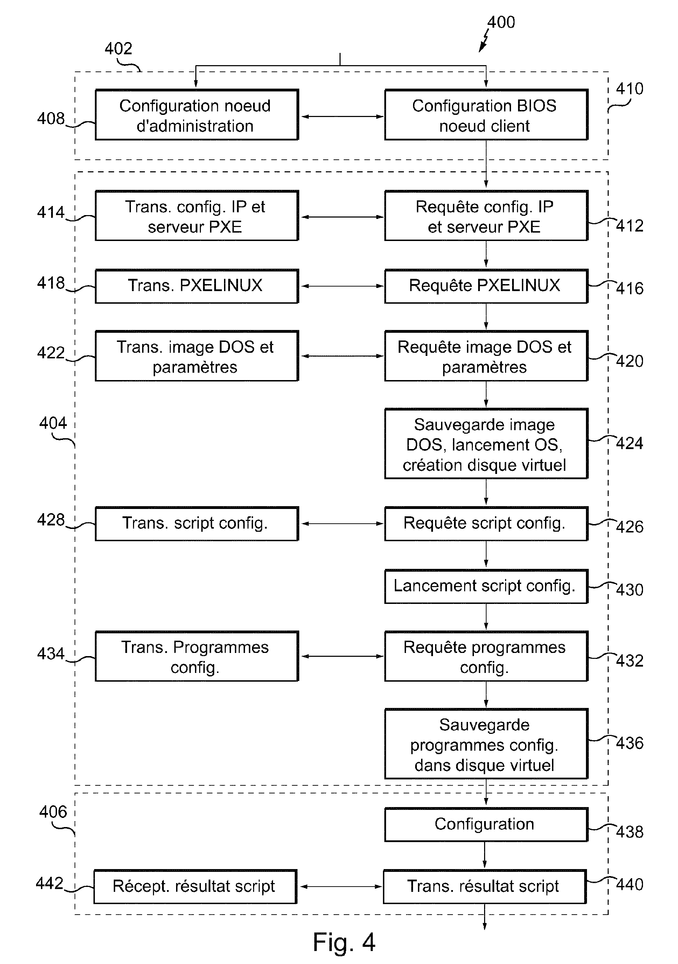

La figure 4 illustre certaines étapes d'un algorithme 400 de démarrage et de configuration d'un système informatique (ou noeud) d'un cluster conformément à un mode de réalisation. Les étapes représentées sur la partie gauche de la figure sont ici mises en oeuvre par un système informatique d'administration (ou noeud d'administration) tandis que les étapes représentées sur la partie droite sont ici mises en oeuvre par un système informatique client (ou noeud client) dans lequel une fonction de configuration ou de maintenance doit être effectuée.

L'architecture des noeuds d'administration et client mettant en oeuvre ces étapes est, par exemple, conforme à celle décrite en référence à la figure 2.

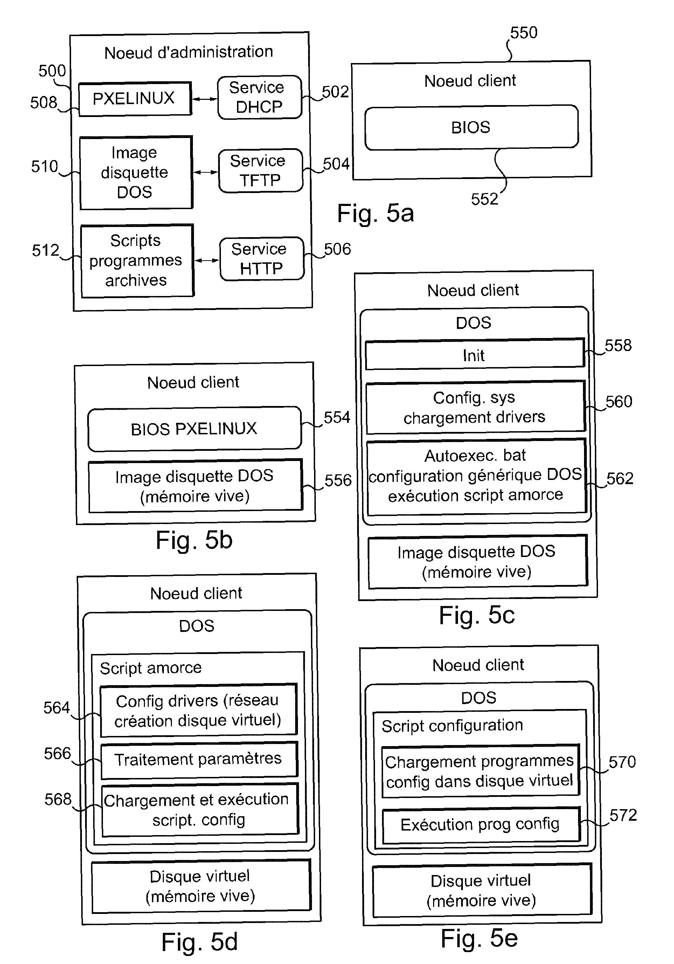

La figure 5, comprenant les figures 5a à 5e, représente schématiquement l'état d'un noeud d'administration et d'un noeud client lors de l'exécution de l'algorithme 400 illustré sur la figure 4.

Comme illustré sur la figure 4, l'algorithme 400 de démarrage et de configuration d'un noeud client comprend ici trois phases principales : une phase 402 de préparation des noeuds, une phase 404 de chargement et de démarrage et une phase 406 de configuration ou maintenance d'un noeud.

La phase 402 de préparation des noeuds comprend notamment une étape 408 de configuration du noeud d'administration et une étape 410 de configuration d'au moins un noeud client dans lequel une opération de configuration ou de maintenance doit être effectuée.

L'étape 408 a pour objet, en particulier, de configurer des services DHCP, TFTP et HTTP ainsi que de stocker des fichiers et des paramètres à télécharger par des noeuds clients, par exemple des paramètres réseau et PXE, l'outil PXELINUX, un fichier image de disquette DOS et des scripts et programmes permettant l'exécution de programmes de configuration et de maintenance.

L'étape 410 vise essentiellement à configurer le BIOS du noeud client dans lequel une fonction de configuration ou de maintenance doit être effectuée afin, notamment, de permettre à ce noeud de démarrer via un réseau.

La figure 5a illustre un exemple d'un noeud d'administration 500 et d'un noeud client 550 configurés suite à l'exécution des étapes 408 et 410.

Comme représenté, le noeud d'administration 500 est configuré pour offrir des services DHCP 502, TFTP 504 et HTTP 506 permettant, en particulier, le transfert de l'outil PXELINUX 508, un fichier image 510 de disquette DOS et des scripts et programmes 512 permettant l'exécution de programmes de configuration et de maintenance, respectivement. Le BIOS 552 du noeud client 550 est configuré pour permettre, en particulier, à ce noeud de démarrer via un réseau.

Suite à la phase de préparation (phase 402), le noeud client dans lequel une opération de configuration ou de maintenance doit être effectuée adresse une requête au noeud d'administration (étape 412) pour obtenir une configuration IP, via le service DHCP. Outre les informations de configurations IP, le noeud client reçoit du noeud d'administration des informations de localisation d'un fichier de directives PXE et de l'outil PXELINUX (étape 414). La localisation de ce fichier de directives et de cet outil permet également de définir le protocole de transfert devant être utilisé, ici le protocole TFTP.

Après avoir obtenu du serveur DHCP une configuration IP et des informations de localisation de fichier de directives et de l'outil PXELINUX, le noeud client émet une requête au noeud d'administration pour réaliser le transfert de ce fichier et de cet outil (étape 416). En réponse à cette requête, le noeud d'administration transmet au noeud client un fichier de directives PXE et l'outil PXELINUX (étape 418).

Le noeud client transmet alors une requête (étape 420) visant l'obtention du fichier correspondant à l'image du système d'exploitation DOS à lancer et aux paramètres associés qui sont reçus du noeud d'administration (étape 422) en réponse à cette requête. Le fichier correspondant à l'image du système d'exploitation DOS à lancer et les paramètres associés sont ici stockés dans la mémoire vive du noeud client (étape 424).

La figure 5b illustre l'état du noeud client, exécutant des instructions du BIOS et l'outil PXELINUX (référence 554) après réception et stockage en mémoire vive du fichier correspondant à l'image du système d'exploitation DOS à lancer et des paramètres associés (référence 556).

Il est observé que les transferts de fichiers utilisent, de préférence, le protocole TFTP qui est généralement utilisé dans le cadre de l'utilisation du protocole PXE.

Après avoir obtenu et mémorisé l'image du système d'exploitation, ce dernier est initialisé, les pilotes (ou *drivers*) sont chargés, par exemple via le fichier connu sous le nom de config.sys, et le système d'exploitation est configuré de façon générique pour être lancé en utilisant, par exemple, le fichier connu sous le nom de autoexec.bat. Un script d'amorce, obtenu avec l'image de disquette DOS, est alors lancé pour configuré le système d'exploitation selon un mode de réalisation particulier.

Comme illustré sur la figure 5c, après le chargement en mémoire des fichiers correspondant à l'image du système d'exploitation et aux paramètres associés, le *bootloader* se termine en enchaînant sur l'exécution du point d'entrée du système d'exploitation DOS préalablement obtenu. Suite à une étape d'initialisation (référence 558), les pilotes sont chargés (référence 560) puis le système d'exploitation est configuré et le script d'amorce pour configurer le système d'exploitation est lancé (référence 562).

Le script d'amorce permet de configurer les pilotes afin de configurer le réseau, créer un disque virtuel en mémoire vive, par exemple un disque virtuel de 100Mo, et traiter des paramètres d'amorce reçus dans les directives PXE pour obtenir des informations, en particulier des informations de localisation, d'un script d'automatisation permettant l'exécution de programmes de configuration et de maintenance.

Ainsi, après avoir obtenu des informations concernant un script d'automatisation permettant l'exécution de programmes de configuration et de maintenance, le noeud client adresse une requête au noeud d'administration pour obtenir ce script d'automatisation (étape 426). Ce script d'automatisation est, de préférence, obtenu via le protocole HTTP (étape 428). Après avoir été reçu, il est exécuté (étape 430).

La figure 5d illustre l'état du noeud client après lancement du script d'amorce utilisé pour configurer le système d'exploitation. Comme décrit précédemment et comme illustré sur la figure 5d, le script d'amorce permet ici de configurer les pilotes, typiquement configurer le pilote réseau et créer un disque virtuel en mémoire vive (référence 564) et traiter des paramètres d'amorce reçus dans les directives PXE pour obtenir des informations de localisation d'un script d'automatisation permettant l'exécution de programmes de configuration et de maintenance (référence 566). Il permet également de charger ce script d'automatisation et de l'exécuter (référence 568).

Le script d'automatisation permettant l'exécution de programmes de configuration et de maintenance comprend des instructions pour charger ces programmes (étapes 432 et 434), les stocker localement dans le disque virtuel (étape 436) et les exécuter (étape 438) pour configurer le noeud client ou exécuter une opération de maintenance.

A titre d'illustration, le script d'automatisation permettant l'exécution de programmes de configuration et de maintenance peut comprendre une instruction pour charger, en utilisant le protocole HTTP et sous forme compressée, un programme de mise à jour du BIOS appelé afudos.zip. Après avoir été obtenu, ce programme est décompressé et stocké dans le disque virtuel sous le nom afudos.exe.

De même, le script d'automatisation permettant l'exécution de programmes de configuration et de maintenance peut comprendre une instruction pour charger, en utilisant le protocole HTTP et sous forme compressée, un fichier de configuration du BIOS appelé X9DRTH2.zip. Après avoir été obtenu, ce fichier est décompressé et stocké dans le disque virtuel sous le nom X9DRTH2.602.

Le script d'automatisation permettant l'exécution de programmes de configuration et de maintenance peut alors comprendre une commande pour exécuter le programme afudos.exe avec les paramètres contenus dans le fichier X9DRTH2.602 pour mettre à jour le BIOS selon des paramètres prédéterminés.

Un résultat d'exécution du script d'automatisation permettant l'exécution de programmes de configuration et de maintenance, par exemple un résultat de mise à jour du BIOS, est, de préférence, transmis au noeud d'administration (étapes 440 et 442).

La figure 5e illustre l'état du noeud client après exécution des programmes de configuration ou de maintenance conformément au script d'automatisation permettant l'exécution de ces programmes. Comme décrit précédemment et comme illustré sur la figure 5e, l'exécution du script d'automatisation permettant l'exécution des programmes de configuration ou de maintenance charge ces derniers dans le disque virtuel (référence 570) et lance leur exécution (référence 572).

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois, la présente invention ne se limite pas aux formes de réalisation présentées. D'autres variantes et modes de réalisation peuvent être déduits et mis en oeuvre par la personne compétente dans le domaine de l'invention à la lecture de la présente description et des figures annexées.

Dans les revendications, le terme « comporter » n'exclut pas d'autres éléments ou d'autres étapes. L'article indéfini « un » n'exclut pas le pluriel. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Procédé de configuration d'un système informatique client (500) dans un cluster comprenant une pluralité de systèmes informatiques dont au moins un est un système informatique d'administration (550), les systèmes informatiques de ladite pluralité de systèmes informatiques étant connectés via un réseau, ledit système informatique client étant configuré pour permettre un démarrage à partir de données stockées dans ledit système informatique d'administration, le procédé étant **caractérisé en ce qu'**il comprend les étapes suivantes,
- obtention (420, 422) d'une image de média de démarrage permettant le démarrage d'un système d'exploitation de type DOS et obtention de données de configuration dudit système d'exploitation, ladite image de média de démarrage et lesdites données de configuration étant reçues dudit système informatique d'administration via ledit réseau ;
- démarrage et configuration (424) dudit système d'exploitation, ladite étape de démarrage et de configuration comprenant une étape de création d'un disque virtuel de stockage ;
- analyse desdites données de configuration reçues et, en réponse, obtention (432) d'au moins un programme de configuration dudit système informatique client, ledit au moins un programme de configuration dudit système informatique client étant reçu dudit système informatique d'administration via ledit réseau et stocké dans ledit disque virtuel de stockage ; et
- exécution (438) dudit au moins un programme de configuration dudit système informatique client.

2. Procédé selon la revendication 1 comprenant en outre une étape d'obtention (426) d'un script d'automatisation permettant l'obtention et l'exécution dudit au moins un programme de configuration dudit système informatique client, ledit script d'automatisation étant obtenu dudit système informatique d'administration.

3. Procédé selon la revendication 2 comprenant en outre une étape d'exécution d'au moins une première commande dudit script d'automatisation pour obtenir ledit au moins un programme de configuration dudit système informatique client et une étape d'exécution d'au moins une seconde commande dudit script d'automatisation pour exécuter ledit au moins un programme de configuration dudit système informatique client.

4. Procédé selon l'une quelconque des revendications 1 à 3 comprenant en outre une étape préliminaire de configuration (408, 410) d'au moins l'un desdits système informatique client et système informatique d'administration.

5. Procédé selon l'une quelconque des revendications 1 à 4 comprenant en outre une étape initiale de chargement (416) d'un programme d'amorçage, ledit programme d'amorçage comprenant des instructions pour l'exécution desdites étapes d'obtention d'une image de média de démarrage permettant le démarrage d'un système d'exploitation de type DOS et d'obtention de données de configuration dudit système d'exploitation.

6. Procédé selon l'une quelconque des revendications 1 à 5 comprenant en outre une étape de transmission (440) d'un résultat d'exécution dudit au moins un programme de configuration dudit système informatique client.

7. Procédé selon l'une quelconque des revendications 1 à 6 comprenant en outre une étape d'obtention d'un script d'amorce, ladite étape de configuration dudit système d'exploitation étant effectuée en réponse à l'exécution d'une commande dudit script d'amorce.

8. Procédé selon l'une quelconque des revendications 1 à 7 selon lequel ladite image de média de démarrage permettant le démarrage d'un système d'exploitation de type DOS et lesdites données de configuration dudit système d'exploitation sont obtenues via ledit réseau selon un protocole de type TFTP et selon lequel ledit au moins un programme de configuration dudit système informatique client est obtenu via ledit réseau selon un protocole de type HTTP.

9. Programme d'ordinateur comprenant des instructions adaptées à la mise en oeuvre de chacune des étapes du procédé selon l'une quelconque des revendications 1 à 8 lorsque ledit programme est exécuté sur un ordinateur.

10. Dispositif comprenant des moyens adaptés à la mise en oeuvre de chacune des étapes du procédé selon l'une quelconque des revendications 1 à 8.
